# EUROPÄISCHE PATENTANMELDUNG

(11) **EP 1 164 054 A1**
(43) Veröffentlichungstag der Anmeldung: **19.12.2001**
(21) Anmeldenummer: 01113511.8
(22) Anmeldetag: 11.06.2001
(51) Int. Cl.: B60Q 5/00, B60R 21/20

(54) **Multifunktionslenkrad**

(30) Priorität: 14.06.2000 DE 20010543 U
(71) Anmelder: TRW Automotive Safety Systems GmbH & Co. KG, 63743 Aschaffenburg (DE)
(72) Erfinder: Schütz, Dominik, 63857 Waldaschaff (DE)
(74) Vertreter: Kitzhofer, Thomas, Dipl.-Ing.

(57) **Zusammenfassung**

Ein Multifünktionslenkrad (10) mit einem Lenkradskelett, wenigstens einer Schaltergruppe (26) bestehend aus Fernbedienungsschaltern (32), die auf einer Platine (30) angeordnet sind, einem Gassackmodul (18), einem Hupkontaktschalter (34) und einer Abdeckung (20), ist dadurch gekennzeichnet, daß der Hupkontaktschalter (34) in der Platine (30) der Schaltergruppe (26) integriert ist.

## Beschreibung

Die Erfindung betrifft ein Multifunktionslenkrad mit einem Lenkradskelett, wenigstens einer Schaltergruppe, bestehend aus Fernbedienungsschaltern, die auf einer Platine angeordnet sind, einem Gassackmodul, einem Hupkontaktschalter und einer Abdeckung.

Bei einem derartigen Lenkrad ist der Hupkontaktschalter üblicherweise auf einer separaten Platine zwischen Abdeckung und Gassackmodul oder zwischen Gassackmodul und Lenkradskelett angeordnet, wobei in letzterer Anordnung zur Betätigung des Hupkontaktschalters das Gassackmodul relativ zum Lenkradskelett mitbewegt werden muß. Der Hupkontaktschalter, bzw. die Platine auf der dieser angebracht ist, muß somit bei der Herstellung des Multifunktionslenkrades einzeln gehandhabt und befestigt werden. Außerdem ist eine eigene Anschlußleitung für die Hupkontaktschalter erforderlich, die bei bewegten Schaltern auch noch flexibel sein muß. Dies stellt einen erheblichen Fertigungs- und Montageaufwand dar.

Die Erfindung hat daher zum Ziel, ein Multifunktionslenkrad zu schaffen, das mit geringem Aufwand hergestellt und zusammengefügt werden kann.

Dieses Ziel wird bei einem Multifunktionslenkrad der eingangs genannten Art dadurch erreicht, daß der Hupkontaktschalter in der Platine der Schaltergruppe integriert ist. Auf diese Weise ist beim Zusammenbau des Lenkrads keine zusätzliche Baugruppe für den Hupkontaktschalter zu handhaben und zu montieren. Die Herstellung der Schaltergruppe und des Hupkontaktschalters kann in einem Arbeitsgang und vorteilhafterweise bei einem speziell dafür ausgerüsteten Zulieferer erfolgen. Weiterhin entfallen auf diese Weise die zusätzlichen Verbindungsleitungen zum Hupkontaktschalter.

Vorteilhafte Ausgestaltungen der Erfindung und deren Vorteile ergeben sich aus den Unteransprüchen.

Die Erfindung wird nachfolgend anhand einer bevorzugten Ausführungsform beschrieben, die in den beigefügten Zeichnungen dargestellt ist. In diesen zeigt:
Fig. 1 eine Ansicht eines erfindungsgemäßen Multifunktionslenkrades;
Fig. 2 einen Schnitt durch das Detail II in Fig. 1 in einer Ebene parallel zur Betrachtungsebene; und
Fig. 3 eine schematische, teilweise angeschnittene Ansicht des Details II aus Fig. 1.

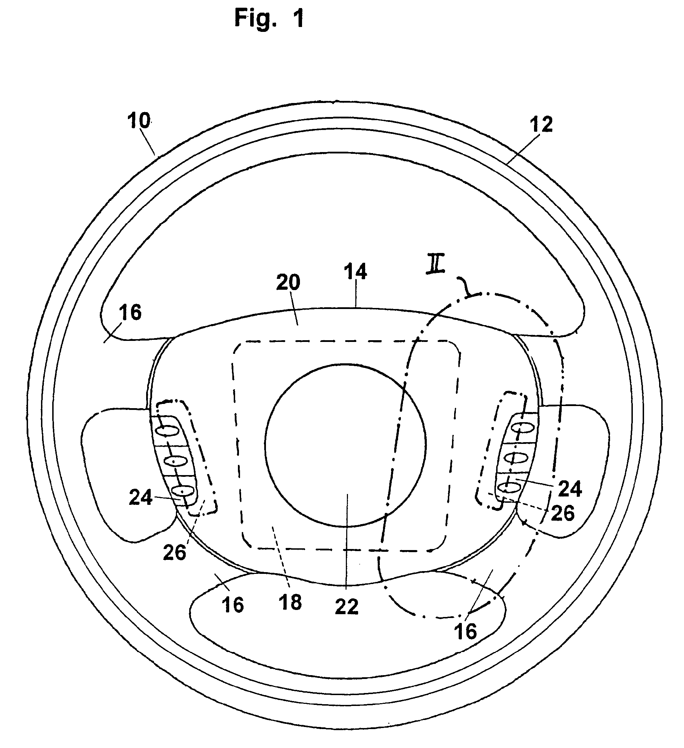

Das in Fig. 1 dargestellte Multifunktionslenkrad 10 weist ein umschäumtes Lenkradskelett auf, das aus einem Lenkradkranz 12, einer Lenkradnabe 14 und Speichen 16 besteht. Im Bereich der Nabe 14 ist das Lenkrad 10 mit einer Abdeckung 20 versehen. An der Nabe 14 ist ein Gassackmodul 18 angebracht, das in Fig. 1 durch die Abdeckung 20 verdeckt wird und daher mit gestrichelten Linien angedeutet ist. Auf der zum Fahrzeuginsassen weisenden Oberfläche der Abdeckung 20 befindet sich eine Plakette 22, die mit einem Emblem des Fahrzeugherstellers versehen sein kann. Im rechten und linken (Lenkradstellung für Geradeausfahrt vorausgesetzt) Randbereich der Abdeckung, zwischen den Speichen 16, sind Bedienelemente 24 vorgesehen, mit welchen Fernbedienungsschalter einer jeweils darunter angeordneten Schaltergruppe 26 für diverse Funktionen betätigt werden können. Die Bedienelemente 24 können beispielsweise als in der Abdeckung 20 ausgebildete elastische Materialabschnitte, als eingeklipste oder angespritzte schwenkbare Abdeckkappen oder in einer anderen dem Fachmann bekannten Form ausgeführt sein.

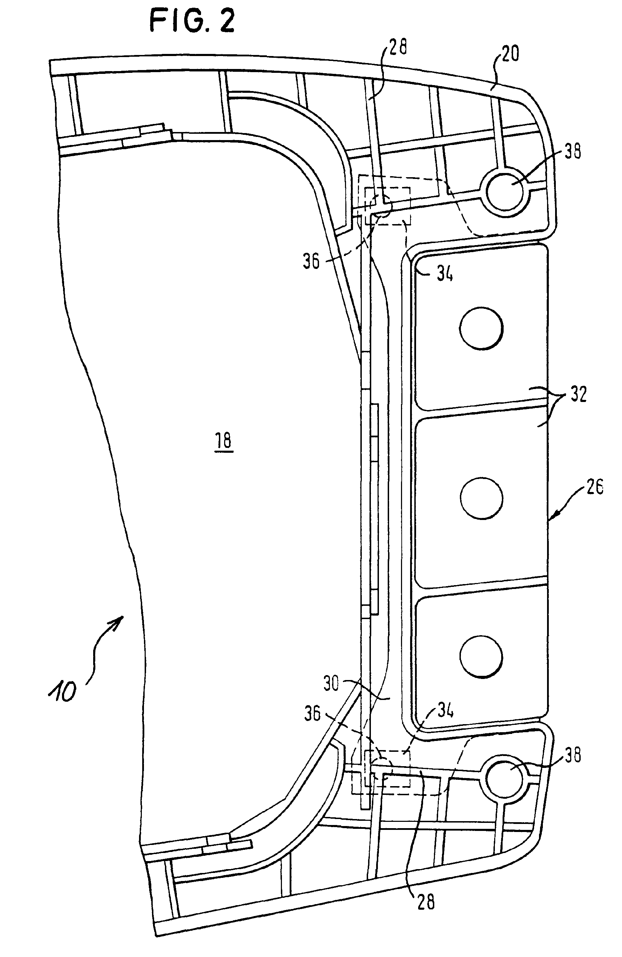

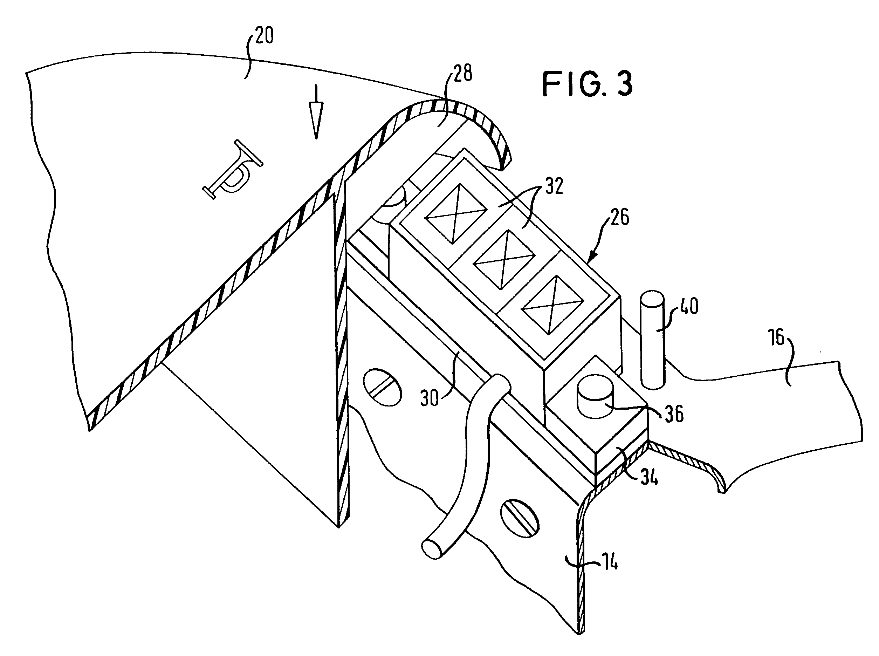

In der Fig. 2 ist ein Schnitt durch die Abdeckung 20 dargestellt, der entlang einer Ebene parallel zur Betrachtungsebene aus Fig. 1 verläuft, wobei die Blickrichtung dieselbe wie in Fig. 1 ist. In Fig. 3 ist zu sehen, daß die Abdeckung 20 an der Unterseite Rippen 28 aufweist, die zur Versteifung der Abdeckung 20 dienen. In der Abbildung sind die Bedienelemente 24 weggelassen, um die Sicht auf eine Schaltergruppe 26 teilweise freizugeben. Die Schaltergruppe 26 besteht aus einer Platine 30 auf der Fernbedienungsschalter 32 angebracht sind. Die Fernbedienungsschalter dienen der Fernbedienung verschiedener Funktionen im Fahrzeug wie beispielsweise Radio oder Navigationssystem und werden mittels der Bedienelemente 24 betätigt. Weiterhin sind auf der Platine Hupkontaktschalter 34 in Form von Mikroschaltern angebracht. Die Fernbedienungsschalter 32 und die Hupkontaktschalter 34 sind vorteilhafterweise auf derselben Seite der Platine angebracht, wodurch die Platine 30 leicht in einem Arbeitsgang bestückt und gelötet werden kann, so daß sich die Herstellung der Schaltergruppe 28 vereinfacht. Selbstverständlich sind zur Befestigung der Schalter außer Löten auch andere Befestigungsmöglichkeiten denkbar.

Auf jeder der beiden Platinen der beiden Schaltergruppen 26 sind bei der beschriebenen Ausführungsform jeweils zwei Hupkontaktschalter 34 vorhanden. Es ist darüber hinaus keine weitere Platine für Fernbedienungsschalter vorgesehen.

Wie in Fig. 2 zu sehen ist, sind die Hupkontaktschalter 34 so angeordnet, daß ihr Druckpunkt 36 jeweils unter einer der Versteifungsrippen 28 liegt. Zur Betätigung der Hupkontaktschalter 34 wird auf die Oberfläche der Abdeckung 20 manuell Druck ausgeübt, worauf die Abdeckung 20 nachgibt und mit einer der Rippen 28 einen der Hupkontaktschalter 34 betätigt. Die Nachgiebigkeit der Abdeckung 20 kann auf zweierlei Arten erreicht werden: entweder durch eine Lagerung der gesamten Abdeckung 20, etwa durch Federn, so daß die Abdeckung parallel zur Drehachse des Lenkrades 10 in Bezug auf das Lenkradskelett verschiebbar ist. Eine zweite Möglichkeit besteht darin, daß die Abdeckung 20 elastisch biegsam sein kann. Durch den manuellen Druck auf die Oberfläche der Abdeckung 20 wird dann erreicht, daß sich die Abdeckung durchbiegt und mit einer ihrer Rippen 28 einen der Hupkontaktschalter 34 betätigt. Die Abdeckung muß in diesem Fall nicht verschiebbar gelagert sein, sie kann am Lenkradskelett oder am Gassackmodul fixiert sein. Dies erleichtert wiederum die Herstellung und die Montage des Lenkrades.

In der Nähe der kurzen Seiten der Schaltergruppe 26 bilden die Rippen 28 zylindrische Hülsen 38. Wie in Fig. 3 zu sehen ist, sind an der Lenkradnabe 14 zylindrische Bolzen 40 vorgesehen. Diese Bolzen 40 greifen in die Öffnungen der Hülsen 38 ein, wodurch die Hülsen 38 und die Bolzen 40 Führungen bilden, welche die Lage der Abdeckung 20 relativ zum Lenkradskelett festlegen. Vorzugsweise befinden sich die Führungen 38, 40 in der Nähe der Hupkontaktschalter 34. Damit wird erreicht, daß die Positionen von Rippen 28 und Druckpunkt 36 der Hupkontaktschalter 34 zueinander genau festgelegt sind. Andernfalls bestünde die Gefahr, daß die Rippe 28 den Druckpunkt 36 infolge zu großer Toleranzen bei der Herstellung und Montage der Komponenten oder durch das Verbiegen der Abdeckung verfehlt.

Die Verwendung von Mikroschaltern mit einem kurzen Schalthub gewährleistet bei fester Abdeckung ein sicheres Schalten, selbst wenn der Befestigungspunkt der Abdeckung in der Nähe des Schalters liegt und die Durchbiegung der Abdeckung damit nur einen kleinen Betätigungsweg bietet. Dies ist besonders von Vorteil, wenn die Führung 38, 40 gleichzeitig zur Befestigung der Abdeckung dient.

Im beschriebenen Ausführungsbeispiel ist die Schaltergruppe 26 an der Lenkradnabe 14 befestigt. Selbstverständlich ist diese Ausführung nur beispielhaft, die Schaltergruppe kann genausogut am Gassackmodul 18 befestigt sein. In diesem Fall kann die Abdeckung mit Gassackmodul und Schaltergruppe als Baugruppe komplett vormontiert sein. Diese Baugruppe ist mit wenig Aufwand am Lenkrad anzubringen, insbesondere muß nur eine elektrische Verbindung hergestellt werden.

Als weitere Gestaltungsmöglichkeit können Abdeckung und Gassackmodul als gemeinsame Einheit verschiebbar gelagert sein, so daß der Hupkontaktschalter durch Verschiebung dieser Einheit betätigt wird. Auch in diesem Fall gewährleisten Führungen in der Nähe der Hupkontaktschalter ein sichere Betätigung.

Die Erfindung bietet gegenüber den Multifunktionslenkrädern herkömmlicher Bauart erhebliche Kostenvorteile bei Produktion und Montage, da die gesamte Elektronik in einer Bauteilegruppe zusammengefaßt werden kann. Dies erlaubt die externe Fertigung bei einem spezialisierten Zulieferer, unabhängig vom Gassackmodul. Damit können die funktional getrennten Baugruppen Lenkrad, Elektronik und Gassackmodul separat gefertigt und vor dem Zusammenbau geprüft werden.

Im Gegensatz zu Lösungen, bei denen die Hupkontaktschalter bei der Hupenbetätigung zusammen mit dem Gassackmodul oder der Abdeckung bewegt werden, ist bei der vorliegenden Erfindung keine flexible elektrische Verbindung zu den Hupkontaktschaltern erforderlich. Dies erhöht wiederum die Zuverlässigkeit des Multifunktionslenkrades.

## Patentansprüche

1. Multifunktions-Lenkrad (10) mit einem Lenkradskelett, wenigstens einer Schaltergruppe (26) bestehend aus Fernbedienungsschaltern (32), die auf einer Platine (30) angeordnet sind, einem Gassackmodul (18), einem Hupkontaktschalter (34) und einer Abdeckung (20), **dadurch gekennzeichnet, daß** der Hupkontaktschalter (34) in der Platine (30) der Schaltergruppe (26) integriert ist.

2. Multifunktions-Lenkrad nach Anspruch 1, **dadurch gekennzeichnet, daß** der Hupkontaktschalter (34) durch Drücken auf die Abdeckung (20) betätigt werden kann.

3. Multifunktions-Lenkrad nach Anspruch 1 oder 2, **dadurch gekennzeichnet, daß** die Schaltergruppe (26) am Lenkradskelett angebracht ist.

4. Multifunktions-Lenkrad nach Anspruch 1 oder 2, **dadurch gekennzeichnet, daß** die Schaltergruppe (26) am Gassackmodul (18) angebracht ist.

5. Multifunktions-Lenkrad nach einem der vorhergehenden Ansprüche, **dadurch gekennzeichnet, daß** die Abdeckung (20) durch Drücken elastisch verformbar ist und der Hupkontakt (34) infolge dieser elastischen Verformung betätigt wird.

6. Multifunktions-Lenkrad nach einem der vorhergehenden Ansprüche, **dadurch gekennzeichnet, daß** die Fernbedienungsschalter (32) und der Hupkontaktschalter (34) auf derselben Seite der Platine (30) angeordnet sind.

7. Multifunktions-Lenkrad nach einem der vorhergehenden Ansprüche, **dadurch gekennzeichnet, daß** die Schaltergruppe (26) eine langgestreckte Form hat und daß Führungen (38, 40) für Modul (18) oder Abdeckung (20) an den kurzen Seiten der Schaltergruppe (26) vorgesehen sind.

8. Multifunktions-Lenkrad nach Anspruch 7, **dadurch gekennzeichnet, daß** die Führungen (38, 40) an die Schaltergruppe (26) angrenzen.
